# EUROPÄISCHE PATENTSCHRIFT

(11) **EP 2 410 609 B1**
(45) Veröffentlichungstag und Bekanntmachung des Hinweises auf die Patenterteilung: **23.03.2016**
(21) Anmeldenummer: 10007669.4
(22) Anmeldetag: 23.07.2010
(51) Int. Cl.: H01Q 1/42, H01Q 19/06, H01Q 21/06, G01F 23/284, H01Q 1/22

(54) **Planarantenne mit Abdeckung**
Planar antenna with cover
Antenne planaire dotée d'un recouvrement

(43) Veröffentlichungstag der Anmeldung: 25.01.2012
(60) Teilanmeldung: 16152027.5
(73) Patentinhaber: VEGA Grieshaber KG, 77709 Wolfach (DE)
(72) Erfinder: Schultheiß, Daniel, 78132 Hornberg (DE)
(74) Vertreter: Westphal, Mussgnug & Partner Patentanwälte mbB

(56) Entgegenhaltungen:
- EP-A1- 2 083 479
- EP-A2- 0 149 400
- EP-A2- 0 301 580
- EP-A2- 0 858 126
- WO-A1-03/085365
- DE-A1-102005 002 505
- US-A- 4 888 597
- US-A1- 2003 151 560
- US-A1- 2007 252 768
- US-A1- 2009 066 590
- US-A1- 2009 251 375
- SPENCER D G: "NOVEL MILLIMETER ACC ANTENNA FEED", IEE COLLOQUIUM ON ANTENNAS FOR AUTOMOTIVES, IEE, LONDON, GB, 10. März 2000 (2000-03-10), Seiten 411-419, XP002160302,

## Beschreibung

Die Erfindung betrifft eine Planarantenne für ein Füllstandradar oder eine Mikrowellenschranke gemäß Oberbegriff des Patentanspruchs 1.

Aus der DE 198 00 306 A1 ist eine Planarantenne für ein Füllstandradar bekannt, bei dem mittels auf einem Substrat angeordneten planaren Strahlerelementen (Patch-Antennen) am stirnseitigen Ende eine Hohlleiters eine axiale HF-Einkopplung erfolgt.

In der Füllstandstechnik gibt es Anwendungen, bei denen eine hohe Temperatur oder ein hoher Druck auftreten kann und die Planarantenne auch einer chemisch aggressiven Atmosphäre ausgesetzt sein kann.

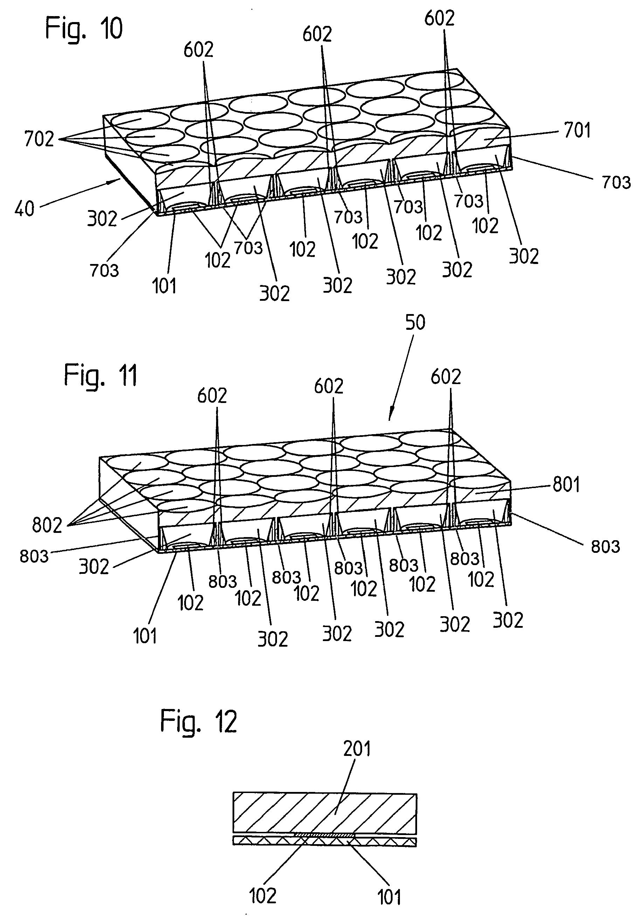

Daher werden im Stand der Technik die auf einem Substrat angeordneten planaren Strahlerelemente mit einer Scheibe aus Keramik oder PTFE (Polytetrafluorethylen, bspw. Teflon) abgedeckt, um insbesondere eine ausreichende chemische Beständigkeit zu erreichen. Eine solche Planarantenne ist schematisch in Figur 12 dargestellt. Hiernach ist auf einer Leiterplatte 101 als Substrat ein planares Strahlerelement 102 angeordnet und wird von einer PTFE-Abdeckung 201 flächenbündig abgedeckt. Hierdurch werden jedoch die HF-Eigenschaften der einzelnen planaren Strahlerelemente stark negativ beeinflusst, insbesondere steht nur eine geringe Bandbreite zur Verfügung. Ferner hat die Abdeckung auch einen großen Einfluss auf die Patch-Geometrie.

Um die HF-Eigenschaften der Antenne und die chemische Beständigkeit zu verbessern, schlägt die WO 2007/124860 A1 vor, ein planares Strahlerelement direkt auf der Rückseite einer solchen Abdeckung, die den Bereich außerhalb der Planarantenne von dem Bereich innerhalb derselben im Sinne einer Prozesstrennung trennt, aufzubringen, wobei eine solche Abdeckung aus Keramik oder Glas hergestellt wird. Durch diese Anordnung des Strahlerelements im Inneren der Antenne kann eine hohe Abdichtung gegenüber der Umgebung, also der Prozessumgebung erzielt werden. Nachteilig ist jedoch die Verwendung von Keramik oder Glas, da diese zu hohen Kosten in der Herstellung führt, insbesondere hinsichtlich der Montage und der erforderlichen Dichtungsmaßnahmen.

Ein weiteres Füllstandsradar das planare Strahlerelemente unter einer Abdeckung verwendet, ist aus US 2003/0151560 A1 bekannt.

Schließlich ist es auch bekannt, die Abdeckung mit einem Abstand von einer halben Wellenlänge der Mikrowellen oder einem Vielfachen hiervon vor dem planaren Strahlerelement anzuordnen. Dies führt jedoch dazu, dass die Druckbelastbarkeit sehr stark abnimmt und daher wieder in nachteiliger Weise auf härtere und druckstabilere Materialien wie Glas oder Keramik zurückgegriffen werden muss, so dass, wie oben bereits ausgeführt, die Herstellungskosten einer solchen Planarantenne erheblich ansteigen.
Die Aufgabe der Erfindung besteht darin, eine der eingangs genannten Art Planarantenne anzugeben, die einen einfachen Aufbau aufweist und damit einfach herstellbar ist, ohne die oben genannten Nachteile aufzuweisen. Insbesondere soll eine solche Planarantenne einem hohen Prozessdruck standhalten können.
Diese Aufgabe wird gelöst durch eine Planarantenne mit den Merkmalen des Patentanspruchs 1.

Eine solche Planarantenne für ein Füllstandradar oder eine Mikrowellenschranke, die wenigstens ein auf einem Substrat angeordnetes planares Strahlerelement und eine Abdeckplatte aus einem Dielektrikum zur Abdeckung des planaren Strahlerelements umfasst, ist erfindungsgemäß vorgesehen, dass die Abdeckplatte im Bereich des wenigstens einen planaren Strahlerelements einen Hohlraum aufweist, in den die von dem planaren Strahlerelement erzeugten Mikrowellen eingekoppelt werden, und zur Abstützung von auf die Abdeckplatte wirkenden Druckkräften die Abdeckplatte zumindest im Randbereich des Hohlraums flächenbündig auf dem Substrat aufliegt.

Durch diese Hohlräume in der Abdeckplatte kann das planare Strahlerelement derart ausgebildet und optimiert werden, als würde es die erzeugten Mikrowellen direkt in Luft abstrahlen. Damit wird eine höhere Bandbreite erzielt.

Die Abstützung der Abdeckplatte auf dem Substrat, und zwar über den Randbereich des Hohlraums, der sich insbesondere bei mehreren vorgesehenen Hohlräumen zwischen diesen stegförmig ausbildet, führt zu einer Erhöhung der Druckbelastung, da über den abgestützten Randbereich bzw. über die zwischen mehreren Hohlräumen sich ausbildende Stege die Druckkräfte auf das Substrat abgeleitet werden.

Eine solche bspw. aus Kunststoff hergestellte Abdeckplatte kann mittels eines Spritzgussverfahrens einfach hergestellt werden.

Gemäß einer vorteilhaften Weiterbildung der Erfindung weist die Abdeckplatte im Bereich des Hohlraums in orthogonaler Richtung hinsichtlich des Substrats eine Dicke auf, die der halben Wellenlänge oder dem ganzzahligen Vielfachen der halben Wellenlänge der erzeugten Mikrowellen entspricht. Dadurch ergibt sich ein Übergang aus dem Hohlraum in die Umgebung der erfindungsgemäßen Planarantenne, der eine maximale Reflexionsdämpfung und eine minimale Durchgangsdämpfung aufweist.

In einer weiteren Ausgestaltung der Erfindung weist die Abdeckplatte im Bereich des Hohlraums eine dielektrische Einrichtung zur Strahlformung der von dem planaren Strahlerelement erzeugten Mikrowellen auf. Vorzugsweise ist diese dielektrische Einrichtung als Linse derart ausgebildet, dass in Abstrahlrichtung der Mikrowellen die Oberfläche der Abdeckplatte entweder konvex oder konkav ausgebildet ist. Mit einer solchen dielektrischen Linse kann für das Strahlerelement die Abstrahlcharakteristik verbessert werden. Zusätzlich wird der Effekt erzielt, dass auf der Oberfläche der Abdeckplatte entstehendes Kondensat an den Spitzen bzw. Rändern der Linse besser abtropfen kann und daher ein solches Kondensat keine Reflexionen bzw. Dämpfungen im Strahlengang der Mikrowellen erzeugen kann. Reflexionen an dieser Stelle würden zu einem erhöhten "Antennenklingeln" führen, das die Empfindlichkeit des Füllstandsensors im Nahbereich verringert und somit eine Messung früher ausfallen könnte. Somit würde eine Dämpfung an dieser Stelle die Empfindlichkeit über den gesamten Messbereich hinweg reduzieren.

In einer besonders vorteilhaften Ausgestaltung der Erfindung ist der Hohlraum als Antennenhorn zur Bildung einer Hornantenne ausgebildet, wobei vorzugsweise die innere Oberfläche des Antennenhorns leitfähig, insbesondere mit einer Metallisierung ausgebildet ist. Damit wird zusätzlich eine Bündelung der Strahlung des planaren Strahlerelements und eine Reduzierung der Nebenzipfel (Nebenkeulen) der Abstrahlcharakteristik der Planarantenne erzielt.

Die Herstellung einer solchen Hornantenne in dem Hohlraum wird besonders einfach, wenn gemäß einer Weiterbildung der Erfindung ein Hornantenneneinsatz verwendet wird, der zur Bildung des Antennenhorns in den Hohlraum eingesetzt wird. Vorzugsweise kann ein solcher Hornantenneneinsatz aus metallisiertem Kunststoff oder vollständig aus Metall hergestellt werden.

Bei Verwendung eines Arrays aus planaren Strahlerelementen wird eine bessere Entkopplung der einzelnen Strahlerelemente durch die Ausgestaltung des jeweiligen zugehörigen Hohlraums als Antennenhorn erreicht.

In einer weiteren Ausgestaltung der Erfindung wird der Hohlraum als Kreiszylinder oder als Zylinder mit einem Vieleck als Grundfläche ausgebildet.

Weiterhin ist es gemäß einer Weiterbildung der Erfindung besonders vorteilhaft, auf dem Substrat eine regelmäßige Anordnung von planaren Strahlerelementen vorzusehen und die in der Abdeckplatte vorgesehenen Hohlräume entsprechend der regelmäßigen Anordnung der Strahlerelemente anzuordnen.

Schließlich ist es gemäß einer Ausgestaltung der Erfindung vorgesehen, die Abdeckplatte aus Polytetrafluorethylen (PTFE), Polypropylen (PP) oder Polyetheretherketon (PEEK) herzustellen, wodurch eine hohe chemische Beständigkeit erreicht wird. Außerdem sind diese Materialen mittels eines Spritzgussverfahrens einfach zu bearbeiten, so dass diese Abdeckplatte mit den erfindungsgemäßen Hohlräumen kostengünstig hergestellt werden kann.

Die Herstellung der Abdeckplatte aus Aluminium-Keramik (A1203) führt ebenso zu einer hohen chemischen Beständigkeit und zusätzlich zu einer hohen mechanischen Belastbarkeit.

Die Erfindung wird nachfolgend anhand von Ausführungsbeispielen unter Bezugnahme auf die beigefügten Figuren ausführlich beschrieben. Es zeigen:
- Figur 1: eine perspektivische Schnittdarstellung einer erfindungsgemäßen Planarantenne als erstes Ausführungsbeispiel,
- Figur 2: eine perspektivische Darstellung des Antennenarrays der Planarantenne nach Figur 1,
- Figur 3: eine perspektivische Darstellung der Abdeckplatte der Planarantenne nach Figur 1 in einer Sicht auf die Unterseite,
- Figur 4: eine Schnittdarstellung eines einzelnen Strahlerelements der Planarantenne nach Figur 1,
- Figur 5: eine perspektivische Schnittdarstellung einer erfindungsgemäßen Planarantenne mit konvexen dielektrischen Linsen als zweites Ausführungsbeispiel,
- Figur 6: eine Schnittdarstellung eines einzelnen Strahlerelements der Planarantenne nach Figur 5,
- Figur 7: eine Schnittdarstellung eines einzelnen Strahlerelements einer Planarantenne mit einer konkaven dielektrischen Linse,
- Figur 8: als drittes Ausführungsbeispiel eine perspektivische Schnittdarstellung einer erfindungsgemäßen Planarantenne, deren Hohlräume mit jeweils einem Antennenhorn ausgebildet ist,
- Figur 9: eine Schnittdarstellung eines einzelnen Strahlerelements der Planarantenne nach Figur 8,
- Figur 10: als viertes Ausführungsbeispiel eine perspektivische Schnittdarstellung einer erfindungsgemäßen Planarantenne nach Figur 8, deren Abdeckplatte konvexe Linsen aufweist,
- Figur 11: als fünftes Ausführungsbeispiel eine perspektivische Schnittdarstellung einer erfindungsgemäßen Planarantenne nach Figur 8, deren Abdeckplatte konkave Linsen aufweist,
- Figur 12: eine Schnittdarstellung einer Planarantenne gemäß Stand der Technik,
- Figur 13: Antennendiagramme eines erfindungsgemäßen planaren Strahlerelements und vergleichsweise eines planaren Strahlerelements gemäß Stand der Technik, und
- Figur 14: Antennendiagramme einer erfindungsgemäßen Planarantenne mit mehreren planaren Strahlerelementen und vergleichsweise einer Planarantenne gemäß Stand der Technik.

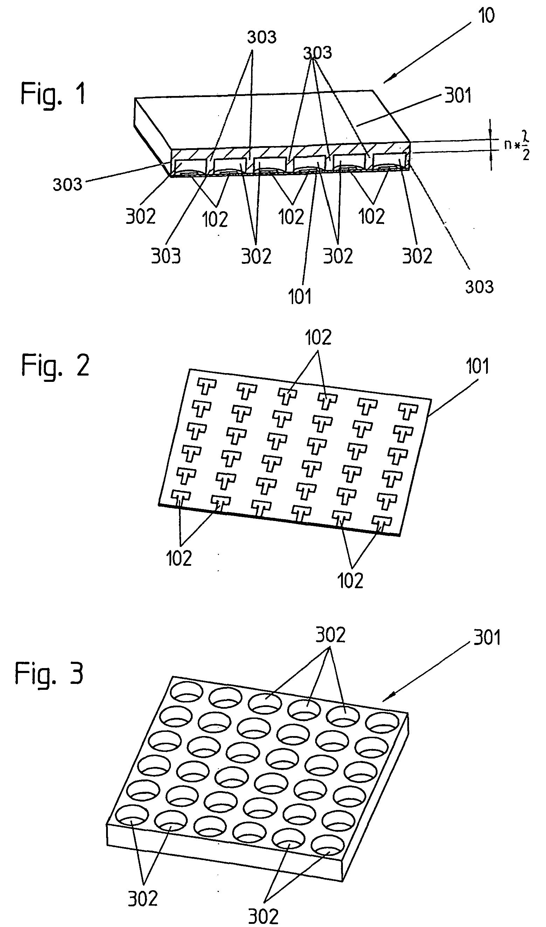

Gleiche oder gleichwirkende Teile in den Figuren 1 bis 12 sind mit identischen Bezugszeichen versehen.

Ein erstes Ausführungsbeispiel zeigen die Figuren 1 bis 4 in unterschiedlichen Darstellungen. Die Planarantenne 10 gemäß Figur 1 umfasst ein Substrat 101, das gemäß Figur 2 mehrere Reihen regelmäßig angeordneter planaren Strahlerelemente (Patch-Antennen) 102 aufweist, sowie eine Abdeckplatte 301, deren Unterseite entsprechend der Darstellung nach Figur 3 kreiszylinderförmige Hohlräume 302 für die einzelnen Strahlerelemente 102 aufweist, so dass jedes einzelne Strahlerelement 102 in einem Hohlraum 302 liegt, wie dies aus Figur 1 zu erkennen ist.

Der zwischen den Hohlräumen 302 liegenden Bereich 303 weist eine stegartige Struktur auf und liegt gemäß Figur 3 flächenbündig auf dem Substrat 101, so dass dadurch eine Abstützung der auf die Abdeckplatte 301 wirkenden Druckkräfte erfolgt, wobei das Substrat 101 seinerseits sich gegen eine dahinter angeordnete Platte oder einen Flansch 304 abstützen kann.

In den nachfolgend beschriebenen Ausführungsbeispielen wurde in den zugehörigen Figuren der Einfachheit halber auf die Darstellung einer solchen Platte 304 bzw. eines solchen Flansches 304 verzichtet.

Die im Bereich der Hohlräume 302 verbleibende Dicke der Abdeckplatte 301 beträgt in der Darstellung gemäß Figur 1 eine halbe Wellenlänge der von den Strahlerelementen 102 erzeugten Mikrowellen oder ein Vielfaches hiervon.

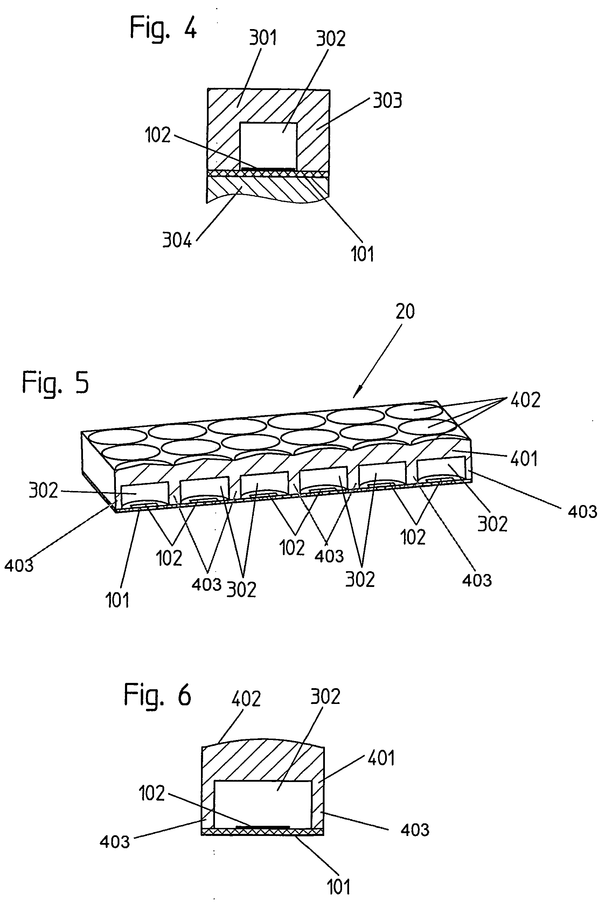

Das zweite Ausführungsbeispiel einer Planarantenne 20 nach Figur 5 ist entsprechend derjenigen nach Figur 1 aufgebaut, umfasst jedoch im Unterschied zu jener eine Abdeckplatte 401, deren Oberfläche jeweils im Bereich der Hohlräume 302 konvexe Erhebungen aufweist, so dass, wie insbesondere aus Figur 6 ersichtlich ist, diese konvexe Erhebungen für jedes Strahlerelement 102 als dielektrische Linse 402 zur Verbesserung von deren Abstrahlcharakteristik dient. Auch bei diesem Ausführungsbeispiel gemäß den Figuren 5 und 6 ist der zwischen den Hohlräumen 302 sich ausbildende Teil 403 der Abdeckplatte 401 stegartig ausgebildet, damit sich die Abdeckplatte 401 über diesen stegförmigen Teil 403 auf dem Substrat 101 abstützen kann.

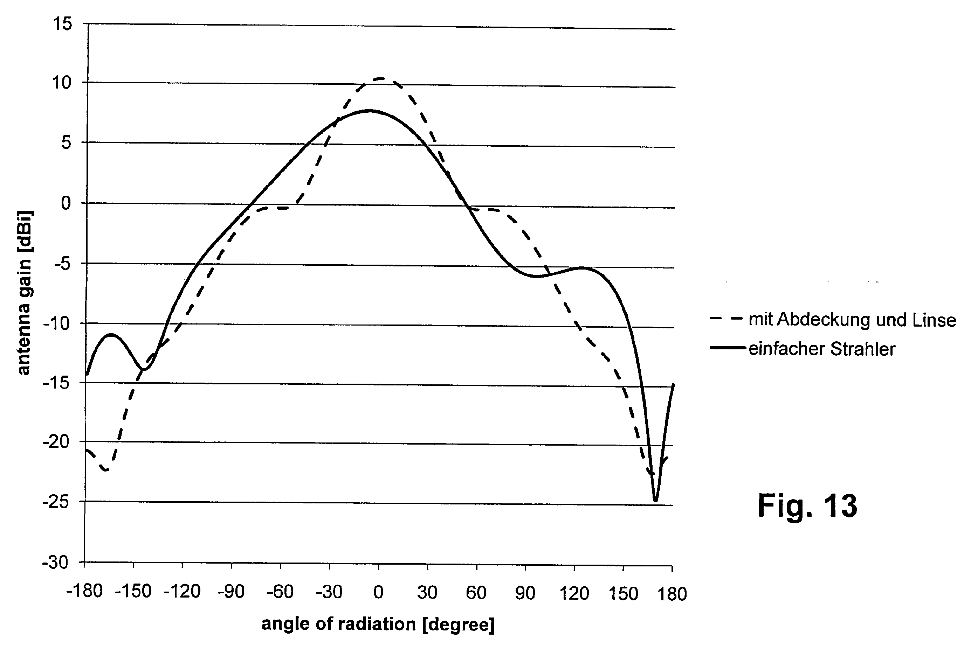

Das Diagramm nach Figur 13 zeigt ein mit einem 3D-Feldsimulationsgrogramm bei 24 GHz erstelltes mit gestrichelter Line dargestellte Antennen-Richtdiagramm eines gemäß Figur 6 aufgebauten einzelnen Strahlerelements 102 im Vergleich zu einem mit durchgezogener Linie dargestellten Antennen-Richtdiagramm eines planaren Strahlerelements gemäß Stand der Technik. Hieraus ist zu erkennen, dass das Antennen-Richtdiagramm des erfindungsgemäßen planaren Strahlerelements 102 einen um ca. 3 dB ansteigenden Antennengewinn gegenüber dem Antennen-Richtdiagramm des Strahlerelements gemäß Stand der Technik zeigt und ferner die Nebenzipfel bezogen auf die Hauptabstrahlung reduziert sind.

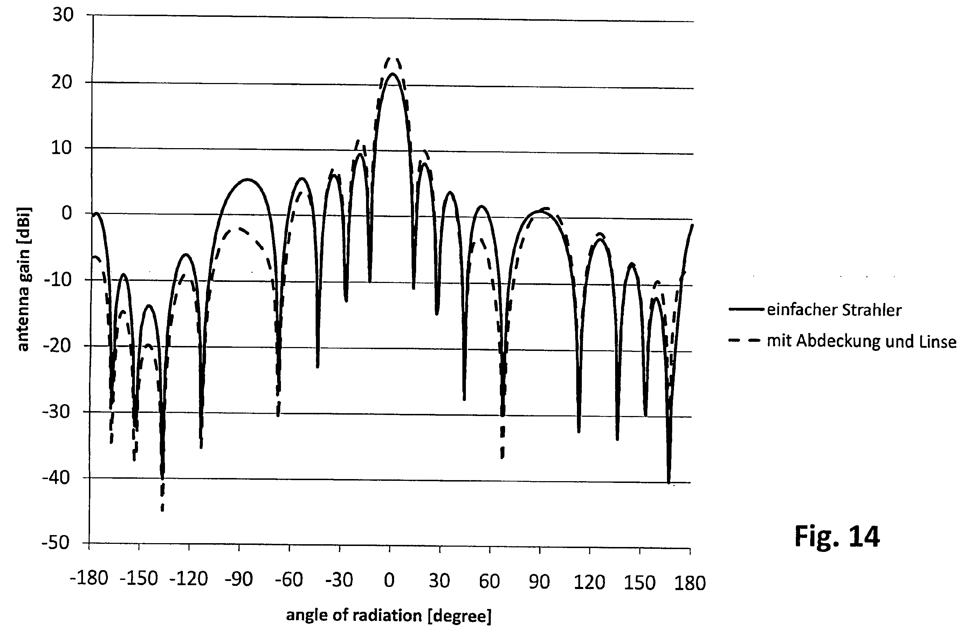

Auch die Simulation mit einer erfindungsgemäßen Planarantenne 20 gemäß Figur 5 mit einem Array von 5x5 Strahlerelementen 102 führt im Vergleich zu einer entsprechenden Planarantenne gemäß Stand der Technik ebenso zu besseren Ergebnissen, wie das Diagramm nach Figur 14 zeigt. So zeigt das mit gestrichelter Linie dargestellte Antennen-Richtdiagramm der erfindungsgemäßen Planarantenne 20 gegenüber dem mit durchgezogener Linie dargestellten Antennen-Richtdiagramm der Planarantenne gemäß Stand der Technik ebenso einen um ca. 3 dB erhöhten Antennengewinn, wobei auch die Nebenzipfel relativ zur Hauptkeule um 2 bis 10 dB des Antennen-Richtdiagramms K1 kleiner sind als bei dem Antennen-Richtdiagramm K2.

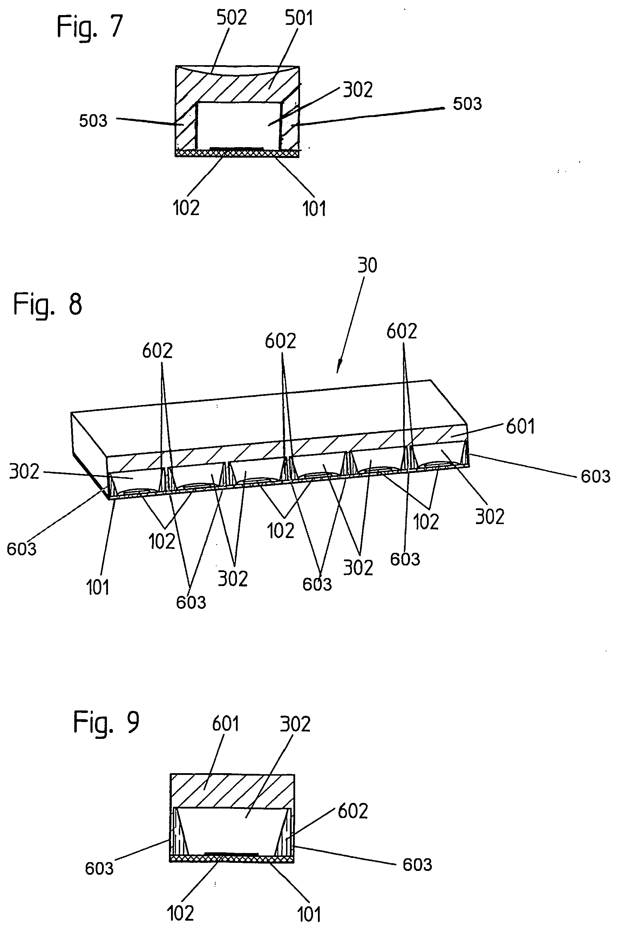

Die Abdeckplatte 401 gemäß Figur 5 kann auch mit dielektrischen Linsen mit einer konkaven Form ausgebildet werden, wie in Figur 7 dargestellt ist. In dieser Figur 7 ist eine Abdeckplatte 501 im Bereich eines einzelnen Strahlerelements 102 gezeigt, deren Oberfläche im Bereich des Hohlraums 302 konkav eingedellt ist und damit für dieses Strahlerelement 102 als dielektrische Linse 502 ebenso zur Verbesserung von deren Abstrahlcharakteristik dient. Die Abdeckplatte 501 stützt sich wieder mit der zwischen den Hohlräumen 302 erstreckenden stegförmigen Struktur 503 auf dem Substrat bzw. der Leiterplatte 101 ab.

Das dritte Ausführungsbeispiel einer erfindungsgemäßen Planarantenne 30 gemäß Figur 8 und Figur 9 entspricht im Aufbau wieder derjenigen nach Figur 1, deren Abdeckplatte 601 weist jedoch Hohlräume 302 auf, die jeweils als Antennenhorn 602 ausgebildet sind, so dass zusammen mit dem jeweiligen Strahlerelement 102 die Wirkung einer Hornantenne entsteht. Auch diese Abdeckplatte 601 stützt sich mit der zwischen den Hohlräumen 302 erstreckenden stegförmigen Struktur 603 auf dem Substrat 101 bzw. der Leiterplatte 101 ab.

Dieses Antennenhorn wird mittels eines in den Hohlraum 302 einführbaren Hornantenneneinsatzes 602 gebildet, das eine leitfähige Oberfläche aufweist. Hierzu wird dieser Hornantenneneinsatzes 602 entweder aus Metall oder einem metallisierten Kunststoff hergestellt. Um einen Hohlraum 302 zu erhalten, dessen Größe demjenigen der Planarantenne nach Figur 1 entspricht, ist der Durchmesser jedes Hohlraums 302 der Abdeckplatte 601 größer gewählt als der Durchmesser des Hohlraums 302 der Abdeckplatte 301 gemäß Figur 1.

Mit einer solchen Ausbildung der Hohlräume 302 zu einem Antennenhorn erfolgt eine zusätzliche Bündelung der einzelnen Strahlerelemente. Ferner wird neben reduzierten Nebenzipfel (Nebenkeulen) in der Antennencharakteristik der Planarantenne 30 auch eine bessere Entkopplung der einzelnen Strahlerelemente 102 durch die Verwendung sogenannter "kleiner Hornantennen" in den Hohlräumen 302 erzielt.

Das vierte Ausführungsbeispiel einer Planarantenne 40 nach Figur 10 ist entsprechend der Planarantenne 30 gemäß Figur 8 mit jeweils als Antennenhorn ausgebildeten Hohlräumen 302 aufgebaut, jedoch mit dem Unterschied, dass die Oberfläche der Abdeckplatte 701 im Bereich der Hohlräume 302 konvexe Erhebungen aufweist, die entsprechend der Abdeckplatte 401 der Planarantenne 20 (Figur 5) als dielektrische Linse 702 für die von dem Strahlerelement 102 erzeugten Mikrowellenstrahlung dient. Die der Abstützung der Abdeckplatte 701 zwischen den Hohlräumen 302 verlaufenden stegförmigen Struktur ist mit dem Bezugszeichen 703 bezeichnet.

Das fünfte und letzte Ausführungsbeispiel einer Planarantenne 50 entspricht der Planarantenne 40 gemäß Figur 10, jedoch mit dem Unterschied, dass die Oberfläche der Abdeckplatte 801 konkave Erhebungen im Bereich der Hohlräume 302 aufweist, die für die von den Strahlerelementen 102 erzeugten Mikrowellenstrahlung als dielektrische Linsen 802 mit konkaver Oberfläche wirken. Die zwischen den Hohlräumen 302 verlaufende stegförmige Struktur 803 dient wieder der Abstützung der Abdeckplatte 801 auf dem Substrat 101.

Die in den erfindungsgemäßen Abdeckplatten 401, 501, 701 und 801 (Figuren 5, 6, 7, 10 und 11) ausgebildeten dielektrischen Linsen 402, 502, 702 und 802 bewirken nicht nur eine verbesserte Abstrahlcharakteristik, sondern lassen auch ein auf der Oberfläche dieser Abdeckplatten entstehendes Kondensat an den Spitzen bzw. Rändern von solchen Linsen besser abtropfen.

Die erfindungsgemäßen Abdeckplatten 401, 501, 601, 701 und 801 können bspw. aus PTFE (Polytetrafluorethylen, Handelsname Teflon), PP (Polypropylen) oder PEEK (Polyetheretherketon) mittels eines Spritzgussverfahrens in einfacher und daher kostengünstiger Weise hergestellt werden. Auch eine Herstellung solcher Abdeckplatten aus Al₂O₃ (Aluminiumoxid-Keramik) ist möglich, um eine besonders hohe chemische Beständigkeit zu erzielen.

### Bezugszeichenliste

- 10: Planarantenne (erstes Ausführungsbeispiel)

- 20: Planarantenne (zweites Ausführungsbeispiel)

- 30: Planarantenne (drittes Ausführungsbeispiel)

- 40: Planarantenne (viertes Ausführungsbeispiel)

- 50: Planarantenne (fünftes Ausführungsbeispiel)

- 101: Substrat, Leiterplatte
- 102: planares Strahlerelement (Patch-Antenne)

- 201: Abdeckplatte (Stand der Technik)

- 301: Abdeckplatte
- 302: Hohlraum
- 303: abstützendes Teil der Abdeckplatte 301
- 304: Platte

- 401: Abdeckplatte
- 402: dielektrische Linse mit konvexer Form
- 403: abstützendes Teil der Abdeckplatte 401

- 501: Abdeckplatte
- 502: dielektrische Linse mit konkaver Form
- 503: abstützendes Teil der Abdeckplatte 501

- 601: Abdeckplatte
- 602: Hornantenneneinsatz
- 603: abstützendes Teil der Abdeckplatte 601

- 701: Abdeckplatte
- 702: dielektrische Linse mit konvexer Form
- 703: abstützendes Teil der Abdeckplatte 701

- 801: Abdeckplatte
- 802: dielektrische Linse mit konkaver Form
- 803: abstützendes Teil der Abdeckplatte 801

## Patentansprüche

1. Planarantenne (10, 20, 30, 40, 50) für ein Füllstandradar oder eine Mikrowellenschranke, umfassend:
- wenigstens ein auf einem Substrat (101) angeordnetes planares Strahlerelement (102), und
- eine Abdeckplatte (301, 401, 501, 601, 701, 801) aus einem Dielektrikum zur Abdeckung des planaren Strahlerelements (102), wobei
- die Abdeckplatte (301, 401, 501, 601, 701, 801) im Bereich des wenigstens einen planaren Strahlerelements (102) einen Hohlraum (302) aufweist, in den die von dem planaren Strahlerelement (102) erzeugten Mikrowellen eingekoppelt werden,
**dadurch gekennzeichnet, dass**
- zur Abstützung von auf die Abdeckplatte (301, 401, 501, 601, 701, 801) wirkenden Druckkräften die Abdeckplatte (301, 401, 501, 601, 701, 801) zumindest im Randbereich (303, 403, 503, 603, 703, 803) des Hohlraums (302) flächenbündig auf dem Substrat (101) aufliegt, auf dem Substrat (101) eine regelmäßige Anordnung von planaren Strahlerelementen (102) vorgesehen ist, und
- die in der Abdeckplatte (301, 401, 501, 601, 701, 801) vorgesehenen Hohlräume (302) entsprechend der regelmäßigen Anordnung der Strahlerelemente (102) unter Ausbildung einer zwischen den Hohlräumen (302) sich erstreckenden stegförmigen Struktur (303, 403, 503, 603, 703, 803) angeordnet sind.

2. Planarantenne (10, 20, 30, 40, 50) nach Anspruch 1,
**dadurch gekennzeichnet, dass**
in orthogonaler Richtung hinsichtlich des Substrats (101) die Abdeckplatte (301, 401, 501, 601, 701, 801) im Bereich des Hohlraums (302) eine Dicke aufweist, die der halben Wellenlänge oder dem ganzzahligen Vielfachen der halben Wellenlänge der erzeugten Mikrowellen entspricht.

3. Planarantenne (10, 20, 30, 40, 50) nach Anspruch 1 oder 2,
**dadurch gekennzeichnet, dass**
die Abdeckplatte (401, 501, 701, 801) im Bereich über dem Hohlraum (302) eine dielektrische Einrichtung (402, 502, 702, 802) zur Strahlformung der von dem planaren Strahlerelement (102) erzeugten Mikrowellen aufweist.

4. Planarantenne (10, 20, 30, 40, 50) nach Anspruch 3,
**dadurch gekennzeichnet, dass**
die dielektrische Einrichtung (402, 502, 702, 802) als Linse ausgebildet ist.

5. Planarantenne (10, 20, 30, 40, 50) nach Anspruch 4,
**dadurch gekennzeichnet, dass**
zur Bildung der Linse (402, 702) in Abstrahlrichtung der Mikrowellen die Oberfläche der Abdeckplatte (401, 701) konvex ausgebildet ist.

6. Planarantenne (10, 20, 30, 40, 50) nach Anspruch 4,
**dadurch gekennzeichnet, dass**
zur Bildung der Linse (502, 802) in Abstrahlrichtung der Mikrowellen die Oberfläche der Abdeckplatte (501, 801) konkav ausgebildet ist.

7. Planarantenne (10, 20, 30, 40, 50) nach einem der vorhergehenden Ansprüche,
**dadurch gekennzeichnet, dass**
der Hohlraum (302) als Antennenhorn (602) zur Bildung einer Hornantenne ausgebildet ist.

8. Planarantenne (10, 20, 30, 40, 50) nach Anspruch 7
**dadurch gekennzeichnet, dass**
die innere Oberfläche des Antennenhorns (602) leitfähig, insbesondere mit einer Metallisierung ausgebildet ist.

9. Planarantenne (10, 20, 30, 40, 50) nach Anspruch 7,
**dadurch gekennzeichnet, dass**
ein Hornantenneneinsatz (602) vorgesehen ist, der zur Bildung des Antennenhorns in den Hohlraum (302) eingesetzt wird.

10. Planarantenne (10, 20, 30, 40, 50) nach Anspruch 9,
**dadurch gekennzeichnet, dass**
der Hornantenneneinsatz (602) aus metallisiertem Kunststoff oder aus Metall hergestellt ist.

11. Planarantenne (10, 20, 30, 40, 50) nach einem der vorhergehenden Ansprüche,
**dadurch gekennzeichnet, dass**
der Hohlraum (302) als Kreiszylinder ausgebildet ist.

12. Planarantenne (10, 20, 30, 40, 50) nach einem der Ansprüche 1 bis 10,
**dadurch gekennzeichnet, dass**
der Hohlraum (302) als Zylinder mit einem Vieleck als Grundfläche ausgebildet ist.

13. Planarantenne (10, 20, 30, 40, 50) nach einem der vorhergehenden Ansprüche,
**dadurch gekennzeichnet, dass**
die Abdeckplatte (301, 401, 501, 601, 701, 801) aus Polytetrafluorethylen (PTFE), Polypropylen (PP) oder Polyetheretherketon (PEEK) hergestellt ist.

14. Planarantenne (10, 20, 30, 40, 50) nach einem der Ansprüche 1 bis 12,
**dadurch gekennzeichnet, dass**
die Abdeckplatte (301, 401, 501, 601, 701, 801) aus Aluminiumoxid-Keramik (Al₂O₃) hergestellt ist.

## Claims

1. Planar antenna (10, 20, 30, 40, 50) for a radar level meter or a microwave barrier, comprising:
- at least one planar radiator element (102), arranged on a substrate (101), and
- a cover plate (301, 401, 501, 601, 701, 801) made from a dielectric to cover the planar radiator element (102),
- said cover plate (301, 401, 501, 601, 701, 801) further comprising a cavity (302) in the region of the at least one planar radiator element (102), into which the microwaves generated by the planar radiator element (102) are coupled, **characterized in that**
- to enable support against pressure forces acting on said cover plate (301, 401, 501, 601, 701, 801), said cover plate (301, 401, 501, 601, 701, 801) is surface-flush on the substrate (101) at least in the edge region (303, 403, 503, 603, 703, 803) of the cavity (302), wherein a regular arrangement of planar radiator elements (102) is provided on the substrate (101), and
- the cavities (302), provided in said cover plate (301, 401, 501, 601, 701, 801), are arranged in accordance with the regular arrangement of the radiator elements (102) to form a web-like structure (303, 403, 503, 603, 703, 803) extending between the cavities (302).

2. Planar antenna (10, 20, 30, 40, 50) according to claim 1, **characterized in that** said cover plate (301, 401, 501, 601, 701, 801) has a thickness proximate the cavity (302) in an orthogonal direction with respect to the substrate (101), that corresponds to half the wavelength or the integer multiple of the half wavelength of the microwaves generated.

3. Planar antenna (10, 20, 30, 40, 50) according to claim 1 or 2, **characterized in that** the cover plate (401, 501, 701, 801) has a dielectric arrangement (402, 502, 702, 802) in a region above the cavity (302) operative to shape the beam of microwaves generated by the planar radiator element (102).

4. Planar antenna (10, 20, 30, 40, 50) according to claim 3, **characterized in that** the dielectric arrangement (402, 502, 702, 802) is operative as a lens.

5. Planar antenna (10, 20, 30, 40, 50) according to claim 4, **characterized in that** the surface of the cover plate (401, 701) is shaped convexly in the direction of radiation of the microwaves to form the lens (402, 702)

6. Planar antenna (10, 20, 30, 40, 50) according to claim 4, **characterized in that** the surface of the cover plate (501, 801) is shaped concavely in the direction of radiation of the microwaves to form the lens (502, 802).

7. Planar antenna (10, 20, 30, 40, 50) according to any one of the preceding claims, **characterized in that** the cavity (302) is shaped as an antenna horn (602) to form a horn antenna.

8. Planar antenna (10, 20, 30, 40, 50) according to claim 7, **characterized in that** the inner surface of the antenna horn (602) is conductive, in particular, formed with a metallization.

9. Planar antenna (10, 20, 30, 40, 50) according to claim 7, **characterized in that** a horn antenna insert (602) is provided, which is inserted in the cavity (302) to form the antenna horn.

10. Planar antenna (10, 20, 30, 40, 50) according to claim 9, **characterized in that** the horn antenna insert (602) is made from metalized plastic or from metal.

11. Planar antenna (10, 20, 30, 40, 50) according to any one of the preceding claims, **characterized in that** the cavity (302) is fashioned as a circular cylinder.

12. Planar antenna (10, 20, 30, 40, 50) according to any one of claims 1 to 10, **characterized in that** the cavity (302) is fashioned as a cylinder with a polygon as the base surface.

13. Planar antenna (10, 20, 30, 40, 50) according to any one of the preceding claims, **characterized in that** the cover plate (301, 401, 501, 601, 701, 801) is made of polytetrafluorethylene (PTFE), polypropylene (PP) or polyether ether ketone (PEEK).

14. Planar antenna (10, 20, 30, 40, 50) according to any one of claims 1 to 12, **characterized in that** the cover plate (301, 401, 501, 601, 701, 801) is made from aluminium ceramics (Al₂O₃).

## Revendications

1. Antenne planaire (10, 20, 30, 40, 50) destinée à un radar de mesure de niveau ou à une barrière à hyperfréquences comprenant :
- au moins un élément rayonnant planaire (102) monté sur un substrat (101), et
- une plaque de recouvrement (301, 401, 501, 601, 701, 801) en un matériau diélectrique pour recouvrir l'élément rayonnant planaire (102),
- la plaque de recouvrement (301, 401, 501, 601, 701, 801) comprenant, dans la zone de l'élément rayonnant planaire (102) une cavité (302) dans laquelle les hyperfréquences produites par l'élément rayonnant planaire (102) sont couplées,
**caractérisée en ce que**
- pour permettre de supporter les contraintes de pression agissant sur la plaque de recouvrement (301, 401, 501, 601, 701, 801) cette plaque de recouvrement (301, 401, 501, 601, 701, 801) s'applique à niveau substrat (101), au moins dans la zone de bord (303, 403, 503, 603, 703, 803) de la cavité (302), sur le substrat (101) il est prévu un arrangement régulier d'éléments rayonnants planaires (102), et
les cavités (302) situées dans la plaque de recouvrement (301, 401, 501, 601, 701, 801) sont positionnées conformément à l'arrangement régulier des éléments rayonnants (102) en formant une structure en forme de traverses (303, 403, 503, 603, 703, 803) s'étendant entre les cavités (302).

2. Antenne planaire (10, 20, 30, 40, 50) conforme à la revendication 1,
**caractérisée en ce que**
dans la direction orthogonale par rapport au substrat (101), la plaque de recouvrement (301, 401, 501, 601, 701, 801) a, dans la zone de la cavité (302) une épaisseur qui correspond à la demi-longueur d'onde ou à un multiple entier de la demi-longueur d'onde des hyperfréquences produites.

3. Antenne planaire (10, 20, 30, 40, 50) conforme à la revendication 1 ou 2,
**caractérisée en ce que**
la plaque de recouvrement (401, 501, 701, 801) comprend, dans la zone située au-dessus de la cavité (302) un dispositif diélectrique (402, 502, 702, 802) pour la mise en forme en un faisceau des hyperfréquences produites par l'élément rayonnant planaire (102).

4. Antenne planaire (10, 20, 30, 40, 50) conforme à la revendication 3,
**caractérisée en ce que**
le dispositif diélectrique (402, 502, 702, 802) est réalisé sous la forme d'une lentille.

5. Antenne planaire (10, 20, 30, 40, 50) conforme à la revendication 4,
**caractérisée en ce que**
pour former la lentille (402, 702), la surface supérieure de la plaque de recouvrement (401, 701) est convexe dans la direction de rayonnement des hyperfréquences.

6. Antenne planaire (10, 20, 30, 40, 50) conforme à la revendication 4,
**caractérisée en ce que**
pour former la lentille (502, 802), la surface supérieure de la plaque de recouvrement (501, 801) est concave dans la direction de rayonnement des hyperfréquences.

7. Antenne planaire (10, 20, 30, 40, 50) conforme à l'une des revendications précédentes,
**caractérisée en ce que**
la cavité (32) est réalisée sous la forme d'un cornet d'antenne (602) pour former une antenne à cornet.

8. Antenne planaire (10, 20, 30, 40, 50) conforme à la revendication 7,
**caractérisée en ce que**
la surface interne du cornet d'antenne (602) est conductrice, et en particulier réalisée avec une métallisation.

9. Antenne planaire (10, 20, 30, 40, 50) conforme à la revendication 7,
**caractérisée en ce qu'**
il est prévu un insert d'antenne en cornet (602) qui est mis en oeuvre pour former le cornet d'antenne dans la cavité (302).

10. Antenne planaire (10, 20, 30, 40, 50) conforme à la revendication 9,
**caractérisée en ce que**
l'insert d'antenne à cornet (602) est réalisé en un matériau synthétique métallisé ou en métal.

11. Antenne planaire (10, 20, 30, 40, 50) conforme à l'une des revendications précédentes,
**caractérisée en ce que**
la cavité (302) est réalisée sous la forme d'un cylindre circulaire.

12. Antenne planaire (10, 20, 30, 40, 50) conforme à l'une des revendications 1 à 10,
**caractérisée en ce que**
la cavité (302) est réalisée sous la forme d'un cylindre ayant une surface périphérique polygonale.

13. Antenne planaire (10, 20, 30, 40, 50) conforme à l'une des revendications précédentes,
**caractérisée en ce que**
la plaque de recouvrement (301, 401, 501, 601, 701, 801) est réalisée en polytétrafluoréthylène (PTFE), en polypropylène (PP) ou en polyétherétherecétone (PEEK).

14. Antenne planaire (10, 20, 30, 40, 50) conforme à l'une des revendications 1 à 12,
**caractérisée en ce que**
la plaque de recouvrement (301, 401, 501, 601, 701, 801) est réalisée en une céramique d'oxyde d'aluminium (Al₂O₃).
